# EUROPÄISCHE PATENTSCHRIFT

(11) **EP 0 994 915 B1**
(45) Veröffentlichungstag und Bekanntmachung des Hinweises auf die Patenterteilung: **12.09.2001**
(21) Anmeldenummer: 98936396.5
(22) Anmeldetag: 29.06.1998
(51) Int. Cl.: C08K 13/04, C08L 77/00

(54) **METALLISCH GEFÄRBTE POLYAMIDE**
METALLIC-COLOURED POLYAMIDES
POLYAMIDES A COLORATION METALLIQUE

(30) Priorität: 07.07.1997 DE 19728914
(43) Veröffentlichungstag der Anmeldung: 26.04.2000
(73) Patentinhaber: BASF AKTIENGESELLSCHAFT, 67056 Ludwigshafen (DE)
(72) Erfinder: WOLF, Peter, D-67281 Kirchheim (DE); VOGEL, Wilfried, D-67125 Dannstadt-Schauernheim (DE); PANKEWITZ, Wolfgang, D-67459 Böhl-Iggelheim (DE); ULMERICH, Karlheinz, D-67316 Carlsberg (DE)
(86) Internationale Anmeldenummer: EP9803959
(87) Internationale Veröffentlichungsnummer: WO9902594

(56) Entgegenhaltungen:
- EP-A- 0 535 955
- PATENT ABSTRACTS OF JAPAN vol. 007, no. 195 (C-183), 25. August 1983 & JP 58 096651 A (SHOWA DENKO KK), 8. Juni 1983 & DATABASE WPI Week 8329 Derwent Publications Ltd., London, GB; AN 83-713441 "Polyamide resin moulding compsn.-" A
- DATABASE WPI Section Ch, Week 9516 Derwent Publications Ltd., London, GB; Class A23, AN 95-118850 XP002081065 & JP 07 041668 A (DUPONT KK) , 10. Februar 1995

## Beschreibung

Die Erfindung betrifft thermoplastische Formmassen, enthaltend

| | |
|---|---|
| A) 10 bis 99,8 Gew.-% | eines thermoplastischen Polyamids |
| B) 0,1 bis 5 Gew.-% | Metallflitter gemäß Anspruch 1 |
| C) 0,05 bis 2 Gew.-% | mindestens einer sterisch gehinderten Phenolverbindung |
| D) 0,05 bis 2 Gew.-% | eines phosphorhaltigen Stabilisators ausgewählt aus der Gruppe von Verbindungen der phosphorigen Säure, Hypophosphite oder deren Mischungen |
| E) 0 bis 70 Gew.-% | weiterer Zusatzstoffe und Verarbeitungshilfsmittel, |

wobei die Summe der Gewichtsprozente der Komponenten A) bis E) 100 % ergibt.

Darüber hinaus betrifft die Erfindung die Verwendung der erfindungsgemäßen Formmassen zur Herstellung von metallisch gefärbten Formkörper jeglicher Art und die hierbei erhältlichen Formkörper.

Für thermisch belastete Teile hat sich der Einsatz von Polyamiden in einer Vielzahl von Anwendungen bewährt. Ein bekanntes Beispiel sind hoch beanspruchte Teile im Kfz-Motorraum, wo die Verwendung von -häufig verstärkten- Polyamiden zum Beispiel für Ansaugrohre, Zylinderkopfhauben, Motorraumabdeckungen und in einer Vielzahl weiterer Einsatzgebiete heute zum Stand der Technik gehört.

Neben den technischen Anforderungen an Polyamide werden Designfragestellungen zunehmend wichtig. Polyamide haben in vielen Anwendungen metallische Werkstoffe verdrängt, wobei sie die technischen Anforderungen weitestgehend erfüllen. Nachteilig sind jedoch die zwischen Kunststoffen wie Polyamiden und Metallen generell bestehenden Unterschiede im optischen Erscheinungsbild, die die Designmöglichkeiten beim Einsatz von Polyamiden einschränken. So ist es beispielsweise notwendig, spezielle aufwendige Nachbehandlungsschritte durchzuführen, wie etwa Lackierungen oder Metallisierungen, um Polyamid-Formteilen ein metallartiges Erscheinungsbild zu verleihen.

Diese Nachbehandlungen sind als zusätzliche Arbeitsschritte mit zusätzlichen Kosten verbunden, erfordern eine wesentlich aufwendigere Bearbeitung der Teile und sind in vielen Fällen, zum Beispiel bei der Verwendung von Lösemitteln zur Lackierung, z.B. unter Umweltschutzaspekten nachteilig.

Wünschenswert wären Polyamide, die in einer solchen Weise direkt eingefärbt werden können, daß Formteile daraus auch ohne weitere Nachbehandlung eine metallähnlichere Optik aufweisen.

In vielen Fällen werden heute zu diesem Zweck Metallpulver, wie Aluminium-, Kupfer- oder Stahlbronzen verwendet, die der Polyamid-Formmasse als Pigmentstoffe zugesetzt werden. Bei vielen, insbesondere kompliziert geformten Teilen, führt dies jedoch zu qualitativ schlechten und unruhigen Formteiloberflächen durch die Abbildung von Fließlinien oder Bindenähten. Außerdem werden die mechanischen Eigenschaften, wie etwa die Schlägzähigkeit, durch derartige Zusatzstoffe meist verschlechtert.

Außerdem zeigen derartig eingefärbte Polyamide bei Temperaturen von oberhalb 80°C eine mit wachsender Temperatur zunehmende Gelbverfärbung, die zu einer ungewünschten Veränderung des Originalfarbtons führt.

Aufgabe der vorliegenden Erfindung war es, Polyamidformmassen zur Verfügung zu stellen, welche metallisch einfärbbar sind unter weitestgehendem Erhalt der mechanischen Eigenschaften. Die metallisch gefärbten Formkörper sollen eine gute Oberfläche (deutlich reduzierte Bindenahtsichtbarkeit) und eine verbesserte Stabilität der Originalfarbe bei höheren Gebrauchstemperaturen aufweisen.

Demgemäß wurden die eingangs definierten Formmassen gefunden.

Bevorzugte Ausführungsformen sind den Unteransprüchen zu entnehmen.

Die Polyamide der erfindungsgemäßen Formmassen weisen im allgemeinen eine Viskositätszahl von 90 bis 350, vorzugsweise 110 bis 240 ml/g auf bestimmt in einer 0,5 gew.-%-igen Lösung in 96 gew.-%-iger Schwefelsäure bei 25°C auf gemäß ISO 307.

Halbkristalline oder amorphe Harze mit einem Molekulargewicht (Gewichtsmittelwert) von mindestens 5.000, wie sie z.B. in den amerikanischen Patentschriften 2 071 250, 2 071 251, 2 130 523, 2 130 948, 2 241 322, 2 312 966, 2 512 606 und 3 393 210 beschrieben werden, sind bevorzugt.

Beispiele hierfür sind Polyamide, die sich von Lactamen mit 7 bis 13 Ringgliedern ableiten, wie Polycaprolactam, Polycapryllactam und Polylaurinlactam sowie Polyamide, die durch Umsetzung von Dicarbonsäuren mit Diaminen erhalten werden.

Als Dicarbonsäuren sind Alkandicarbonsäuren mit 6 bis 12, insbesondere 6 bis 10 Kohlenstoffatomen und aromatische Dicarbonsäuren einsetzbar. Hier seien nur Adipinsäure, Azelainsäure, Sebacinsäure, Dodecandisäure und Terephthal- und/oder Isophthalsäure als Säuren genannt.

Als Diamine eignen sich besonders Alkandiamine mit 6 bis 12, insbesondere 6 bis 8 Kohlenstoffatomen sowie m-Xylylendiamin, Di-(4-aminophenyl)methan, Di-(4-aminocyclohexyl)-methan, 2,2-Di(4-aminophenyl)-propan oder 2,2-Di-(4-aminocyclohexyl)-propan.

Bevorzugte Polyamide sind Polyhexamethylenadipinsäureamid, Polyhexamethylensebacinsäureamid und Polycaprolactam sowie Copolyamide 6/66, insbesondere mit einem Anteil von 5 bis 95 Gew.-% an Caprolactam-Einheiten.

Außerdem seien auch noch Polyamide erwähnt, die z.B. durch Kondensation von 1,4-Diaminobutan mit Adipinsäure unter erhöhter Temperatur erhältlich sind (Polyamid-4,6). Herstellungsverfahren für Polyamide dieser Struktur sind z.B. in den EP-A 38 094, EP-A 38 582 und EP-A 39 524 beschrieben.

Weiterhin sind Polyamide, die durch Copolymerisation zweier oder mehrerer der vorgenannten Monomeren erhältlich sind, oder Mischungen mehrerer Polyamide geeignet, wobei das Mischungsverhältnis beliebig ist.

Weiterhin haben sich solche teilaromatischen Copolyamide wie PA 6/6T und PA 66/6T als besonders vorteilhaft erwiesen, deren Triamingehalt weniger als 0,5, vorzugsweise weniger als 0,3 Gew.-% beträgt (siehe EP-A 299 444).

Die Herstellung der bevorzugten teilaromatischen Copolyamide mit niedrigem Triamingehalt kann nach den in den EP-A 129 195 und 129 196 beschriebenen Verfahren erfolgen.

Selbstverständlich können auch Mischungen (Blends) derartiger Polymere eingesetzt werden.

Die Polyamide sind in den erfindungsgemäßen Formmassen in Mengen von 10 bis 99,8, vorzugsweise von 20 bis 99,3 und insbesondere von 40 bis 98 Gew.-% enthalten.

Als Komponente B) enthalten die erfindungsgemäßen Formmassen 0,1 bis 5, vorzugsweise 0,5 bis 3 und insbesondere 1 bis 3 Gew.-% Metallflitter.

Unter Metallflitter versteht man im allgemeinen Metallpartikel, welche durch Schneiden oder Stanzen von unbeschichteten oder transparent gefärbt beschichteten Metallfolien hergestellt werden. Auch gestanzte metallisierte Kunststoffolien oder andere metallisierte Trägermaterialien, können eingesetzt werden.

Als Metalle sind bevorzugt Aluminium, Kupfer und Stahlbronzen geeignet.

Die Form der Metallflitter ist rechteckig oder quadratisch, wobei die Kantenlänge 0,050 bis 1 mm und insbesondere 0,10 bis 0,40 mm beträgt.

Die Metallflitter weisen einen Feinanteil < 50 µm bevorzugt < 5 µm von ≤ 1 %, bevorzugt ≤ 0,5 %, bezogen auf 100 Gew.-% B), auf.

Die Bestimmung des Feinanteils der Partikel erfolgt üblicherweise durch Siebung, nach ISO 787/7.

Der Feinanteil ergibt sich durch Bestimmung des Anteils, der nicht vom Sieb mit bestimmter Maschengröße zurückgehalten wird.

Als sterisch gehinderte Phenole C) eignen sich prinzipiell alle Verbindungen mit phenolischer Struktur, die am phenolischen Ring mindestens eine sterisch anspruchsvolle Gruppe, bevorzugt mindestens 2 sterisch gehinderte OH-Gruppen pro Molekül aufweisen.

Vorzugsweise kommen z.B. Verbindungen der Formel 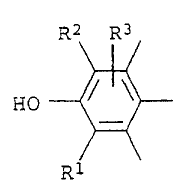 in Betracht, in der bedeuten:
R¹ und R² eine Alkylgruppe, eine substituierte Alkylgruppe oder eine substituierte Triazolgruppe, wobei die Reste R¹ und R² gleich oder verschieden sein können und
R³ eine Alkylgruppe, eine substituierte Alkylgruppe, eine Alkoxigruppe oder eine substituierte Aminogruppe. Antioxidantien der genannten Art werden beispielsweise beschrieben in der DE-A-27 02 661 (US-A-4 360 617).

Eine weitere Gruppe bevorzugter sterisch gehinderter Phenole leiten sich von substituierten Benzolcarbonsäuren ab, insbesondere substituierter Benzolpropionsäure.

Besonders bevorzugte Verbindungen aus dieser Klasse sind Verbindungen der Formel 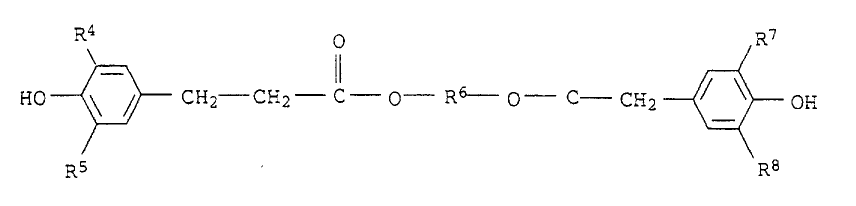 wobei R⁴, R⁵, R⁷ und R⁸ unabhängig voneinander C₁-C₈-Alkylgruppen, die ihrerseits substituiert sein können (mindestens eine davon ist eine sterisch anspruchsvolle Gruppe) und R⁶ einen zweiwertigen aliphatischen Rest mit 1 bis 10 C-Atomen, der in der Hauptkette auch C-O-Bindungen aufweisen kann.

Bevorzugte Verbindungen, die dieser Formel entsprechen, sind

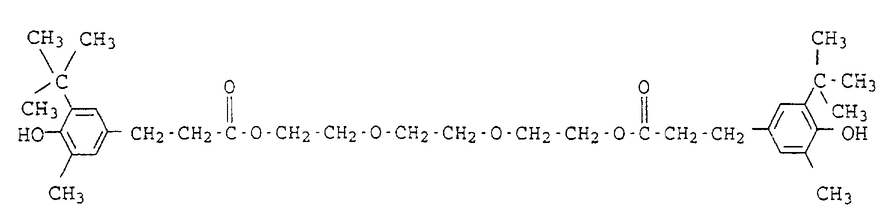

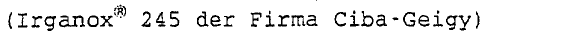

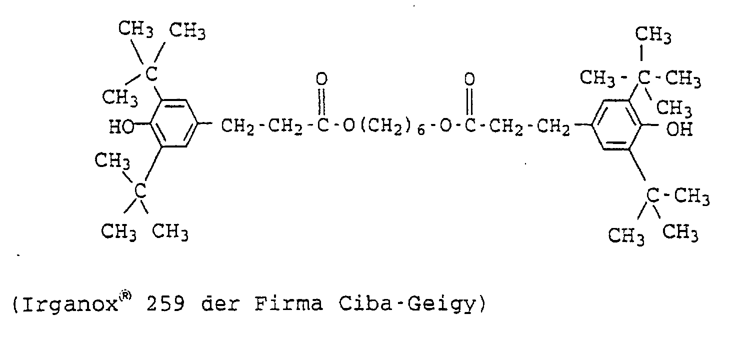

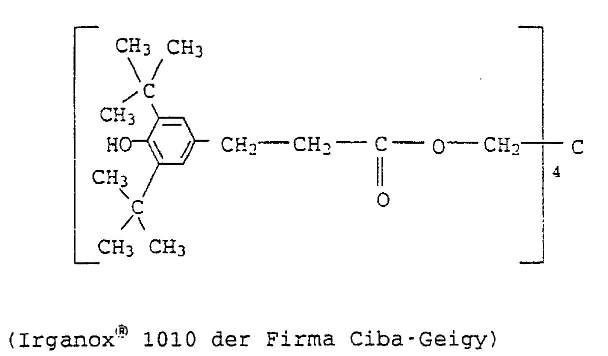

Beispielhaft genannt seien insgesamt als sterisch gehinderte Phenole:

2,2'-Methylen-bis(4-methyl-6-tert.-butylphenol), 1,6-Hexandiolbis[3-(3,5-di-tert.-butyl-4-hydroxyphenyl)-propionat], Pentaerythrit-tetrakis-[3-(3,5-di-tert.-butyl-4-hydroxyphenyl)-propionat], Distearyl-3,5-di-tert.-butyl-4-hydroxybenzylphosphonat, 2,6,7-Trioxa-1-phosphabicyclo-[2.2.2]oct-4-yl-methyl-3,5-di-tert.-butyl-4-hydroxyhydrocinnamat, 3,5-Di-tert.-butyl-4-hydroxyphenyl-3,5-distearyl-thiotriazylamin, 2-(2'-Hydroxy3'-Hydroxy-3',5'-di-tert.-butylphenyl)-5-chlorbenzotriazol, 2,6-Di-tert.-butyl-4-hydroxymethylphenol, 1,3,5-Trimethyl-3,4,6-tris-(3,5-di-tert.-butyl-4-hydroxybenzyl)-benzol, 4,4'-Methylen-bis-(2,6-di-tert.-butylphenol), 3,5-Di-tert.-butyl-4-hydroxy-benzyl-dimethylamin und N,N'-Hexamethylenbis-3,5-di-tert.-butyl-4-hydroxyhydrocinnamid.

Als besonders wirksam erwiesen haben sich und daher vorzugsweise verwendet N,N'-hexamethylen-bis-(3,5-di-tert-butyl-4-hydroxyhydrozimtsäureamid, Pentaerythrityl-tetrakis-3-(3,5-di-tert-butyl-4-hydroxyphenyl)propionat, n-Octadecanoyl-3-(3,5-di-tert-butyl-4-hydroxyphenyl)-propionat, Bis-[3,3-bis-(4'-hydroxy-3'-tert-butylphenyl)butansäure-acid]glycolester oder deren Mischungen welche unter den Warenzeichen Irganox® 1098, (Ciba Geigy AG) oder Lowinox HD 98 (Firma: Great Lakes Chemical), Irganox® 1010 (Ciba Geigy AG) oder Hostanox® 010 (Firma Hoechst AG), Irganox® 1076 (Ciba Geigy AG und Hostanox® 03 (Firma Hoechst AG) im Handel erhältlich sind.

Die Antioxidantien (C), die einzeln oder als Gemische eingesetzt werden können, werden in einer Menge von 0,05 bis 2 Gew.-%, vorzugsweise von 0,1 bis 1,0 Gew.-% und insbesondere 0,2 bis 0,6 Gew.-% eingesetzt.

Als Komponente D) enthalten die erfindungsgemäßen Formmassen mindestens einen phosphorhaltigen Stabilisators ausgewählt aus der Gruppe von Verbindungen, vorzugsweise der Esterderivate der phosphorigen Säure, der Hypophosphite oder deren Mischungen in Mengen von 0,05 bis 2, vorzugsweise von 0,05 bis 1 und insbesondere 0,05 bis 0,5 Gew.-%.

Bei der Komponente D) handelt es sich vorzugsweise um organische und anorganische Phosphor enthaltende Stabilisatoren, in denen der Phosphor die Wertigkeitsstufe + 1 oder + 3 besitzt.

Unter der Wertigkeitsstufe soll der Begriff "Oxidationsstufe" verstanden werden, wie er im Lehrbuch der Anorganischen Chemie von A.F. Hollemann und E. Wiberg, Walter des Gruyter und Co. (1964, 57 bis 70. Auflage) Seite 166 bis 177 wiedergegeben ist. Phosphorverbindungen der möglichen Wertigkeitsstufen -3 bis +5 leiten sich von Phosphin (-3), Diphosphin (-2), Phosphinoxid (-1), elementarem Phosphor (+0), hypophosphoriger Säure (+1), phosphoriger Säure (+3), Hypodiphosphorsäure (+4) und Phosphorsäure (+5) ab.

Aus der großen Zahl von phosphorhaltigen Verbindungen seien nur einige Beispiele erwähnt.

Phosphorverbindungen der "Oxidationsstufe" +1 sind z.B. Hypophosphite. Sie können Salzcharakter haben oder rein organischer Natur sein. Beispiele sind Calciumhypophosphit und Magnesiumhypophosphit, daneben auch Doppelhypophosphite oder komplexe Hypophosphite, oder organische Hypophosphite, wie Cellulosehypophosphitester, Ester der hypophosphorigen Säuren mit Diolen, wie z.B. von 1,10-Dodecyldiol. Auch substituierte Phosphinsäuren und deren Anhydride, wie z.B. Diphenylphosphinsäure, können eingesetzt werden. Auch Melaminhypophosphit ist geeignet. Des weiteren kommen in Frage Diphenylphosphinsäure, Di-p-Tolylphosphinsäure, Di-Kresylphosphinsäureanhydrid; es kommen aber auch Verbindungen wie Hydrochinon-, Ethylenglykol-, Propylenglykol-bis (diphenylphosphinsäure)ester u.a. in Frage. Ferner sind geeignet Aryl (Alkyl)phosphinsäureamide, wie z.B. Diphenylphosphinsäure-dimethylamid und sulfonamidoaryl(alkyl)phosphinsäurederivate, wie z.B. p-Tolylsulfonamidodiphenylphosphinsäure.

Besonders bevorzugte Hypophosphite sind Alkalihypophosphite, wobei Natriumhypophosphit ganz besonders bevorzugt ist.

Phosphorverbindungen der Oxidationsstufe +3 leiten sich von der phosphorigen Säure ab. Geeignet sind cyclische Phosphonate, die sich vom Pentaerythrit, Neopentylglykol oder Brenzkatechin ableiten. Ferner ist Phosphor der Wertigkeitsstufe +3 in Triaryl(alkyl)phosphiten, wie z.B. Triphenylphosphit, Tris(4-decylphenyl)phosphit, Tris(2,4-di-tert.-butylphenyl)phosphit oder Phenyldidecylphosphit u. a. enthalten. Es kommen aber auch Diphosphite, wie z.B. Propylenglykol-1,2-bis(diphosphit) oder cyclische Phosphite, die sich vom Pentaerythrit, Neopentylglykol oder Brenzkatechin ableiten, in Frage.

Besonders bevorzugt werden Esterderivate der phosphorigen Säure eingesetzt, wobei 2-[[2,4,8,10-Tetrakis(1,1)-dimethylethyl)dibenzo[D,F] [1,3,2]-dioxaphosphepin-6-yl]oxy]-N,N-bis[2-[[2,4,8,10-tetrakis(1,1-dimethylethyl)di-benzo[D,F] [1,3,2]dioxaphosphepin-6-yl]oxy]ethyl)ethanamine und Tris-2,4-di-tert-butylphenyl)phosphit bevorzugt sind.

Derartige Stabilisatoren sind unter dem Warenzeichen Irgafos® 12, Irgafos® 168 (Firma Ciba Geigy AG) oder Hostanox® PAR 24 (Firma Hoechst AG) im Handel erhältlich.

Als Komponente E) können die erfindungsgemäßen Formmassen bis zu 70, insbesondere nicht mehr als 50 Gew.-% weitere Zusatzstoffe und verarbeitungshilfsmittel enthalten.

Als Komponente E) können die erfindungsgemäßen Formmassen 1 bis 50, bevorzugt 5 bis 40 und insbesondere 10 bis 30 Gew.-% eines Füllstoffes enthalten.

Als bevorzugte faserförmige Füllstoffe seien Kohlenstoffasern, Aramid-Fasern und Kaliumtitanat-Fasern genannt, wobei Glasfasern als E-Glas besonders bevorzugt sind. Diese können als Rovings oder Schnittglas in den handelsüblichen Formen eingesetzt werden.

Die faserförmigen Füllstoffe können zur besseren Verträglichkeit mit dem Thermoplasten mit einer Silanverbindung oberflächlich vorbehandelt sein.

Geeignet sind auch nadelförmige mineralische Füllstoffe.

Unter nadelförmigen mineralischen Füllstoffen wird im Sinne der Erfindung ein mineralischer Füllstoff mit stark ausgeprägtem nadelförmigen Charakter verstanden. Als Beispiel sei nadelförmiger Wollastonit genannt. Vorzugsweise weist das Mineral ein L/D- (Länge Durchmesser)-Verhältnis von 8 : 1 bis 35 : 1, bevorzugt von 8 : 1 bis 11 : 1 auf. Der mineralische Füllstoff kann gegebenenfalls mit den vorstehend genannten Silanverbindungen vorbehandelt sein; die Vorbehandlung ist jedoch nicht unbedingt erforderlich.

Als weitere Füllstoffe seien Kaolin, calciniertes Kaolin, Glimmer Wollastonit, Talkum und Kreide genannt.

Als weitere Zusatzstoffe und Verarbeitungshilfsmittel seien in Mengen von 0 bis 2 Gew.-% fluorhaltige Ethylenpolymerisate genannt. Hierbei handelt es sich um Polymerisate des Ethylens mit einem Fluorgehalt von 55 bis 76 Gew.-%, vorzugsweise 70 bis 76 Gew.-%.

Beispiele hierfür sind Polytetrafluorethylen (PTFE), Tetrafluorethylen-Copolymere mit kleineren Anteilen (in der Regel bis zu 50 Gew.-%) copolymerisierbarer ethylenisch ungesättigter Monomerer. Diese werden z.B. von Schildknecht in "Vinyl and Related Polymers", Wiley-Verlag, 1952, Seiten 484 bis 494, und von Wall in "Fluorpolymers" (Wiley Interscience, 1972) beschrieben.

Weitere Zusatzstoffe sind beispielsweise in Mengen bis zu 40, vorzugsweise bis zu 30 Gew.-% kautschukelastische Polymerisate (oft auch als Schlagzähmodifier, Elastomere oder Kautschuke bezeichnet).

Ganz allgemein handelt es sich dabei um Copolymerisate die bevorzugt aus mindestens zwei der folgenden Monomeren aufgebaut sind: Ethylen, Propylen, Butadien, Isobuten, Isopren, Chloropren, Vinylacetat, Styrol, Acrylnitril und Acryl- bzw. Methacrylsäureester mit 1 bis 18 C-Atomen in der Alkoholkomponente.

Derartige Polymere werden z.B. in Houben-Weyl, Methoden der organischen Chemie, Bd. 14/1 (Georg-Thieme-Verlag, Stuttgart, 1961). Seiten 392 bis 406 und in der Monographie von C.B. Bucknall, "Toughened Plastics" (Applied Science Publishers, London, 1977) beschrieben.

Im folgenden werden einige bevorzugte Arten solcher Elastomerer vorgestellt.

Bevorzugte Arten von solchen Elastomeren sind die sog. Ethylen-Propylen (EPM) bzw. Ethylen-Propylen-Dien-(EPDM)-Kautschuke.

EPM-Kautschuke haben im allgemeinen praktisch keine Doppelbindungen mehr, während EPDM-Kautschuke 1 bis 20 Doppelbindungen/100 C-Atome aufweisen können.

Als Dien-Monomere für EPDM-Kautschuke seien beispielsweise konjugierte Diene wie Isopren und Butadien, nicht-konjugierte Diene mit 5 bis 25 C-Atomen wie Penta-1,4-dien, Hexa-1,4-dien, Hexa-1,5-dien, 2,5-Dimethylhexa-1,5-dien und Octa-1,4-dien, cyclische Diene wie Cyclopentadien, Cyclohexadiene, Cyclooctadiene und Dicyclopentadien sowie Alkenylnorbornene wie 5-Ethyliden-2-norbornen, 5-Butyliden-2-norbornen, 2-Methallyl-5-norbornen, 2-Isopropenyl-5-norbornen und Tricyclodiene wie 3-Methyl-tricyclo(5.2.1.0.2.6)-3,8-decadien oder deren Mischungen genannt. Bevorzugt werden Hexa-1,5-dien-5-ethyliden-norbornen und Dicyclopentadien. Der Diengehalt der EPDM-Kautschuke beträgt vorzugsweise 0,5 bis 50, insbesondere 1 bis 8 Gew.-%, bezogen auf das Gesamtgewicht des Kautschuks.

EPM- bzw. EPDM-Kautschuke können vorzugsweise auch mit reaktiven Carbonsäuren oder deren Derivaten gepfropft sein. Hier seien z.B. Acrylsäure, Methacrylsäure und deren Derivate, z.B. Glycidyl(meth)acrylat, sowie Maleinsäureanhydrid genannt.

Eine weitere Gruppe bevorzugter Kautschuke sind Copolymere des Ethylens mit Acrylsäure und/oder Methacrylsäure und/oder den Estern dieser Säuren. Zusätzlich können die Kautschuke noch Dicarbonsäuren wie Maleinsäure und Fumarsäure oder Derivate dieser Säuren, z.B. Ester und Anhydride, und/oder Epoxy-Gruppen enthaltende Monomere enthalten. Diese Dicarbonsäurederivate bzw. Epoxygruppen enthaltende Monomere werden vorzugsweise durch Zugabe von Dicarbonsäure- bzw. Epoxygruppen enthaltenden Monomeren der allgemeinen Formeln I oder II oder III oder IV zum Monomerengemisch in den Kautschuk eingebaut:

R¹C(COOR²) =C (COOR³) R⁴ (I)

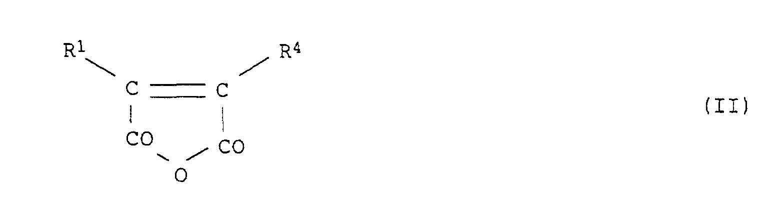

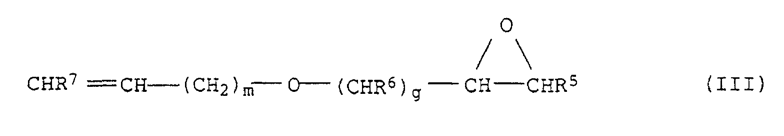

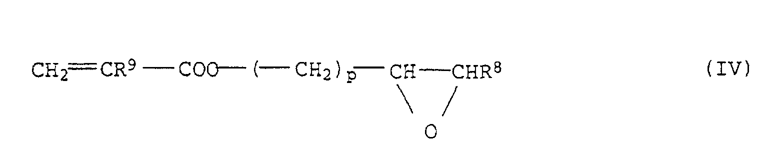

wobei R¹ bis R⁹ Wasserstoff oder Alkylgruppen mit 1 bis 6 C-Atomen darstellen und m eine ganze Zahl von 0 bis 20, g eine ganze Zahl von 0 bis 10 und p eine ganze Zahl von 0 bis 5 ist.

Vorzugsweise bedeuten die Reste R¹ bis R⁹ Wasserstoff, wobei m für 0 oder 1 und g für 1 steht. Die entsprechenden Verbindungen sind Maleinsäure, Fumarsäure, Maleinsäureanhydrid, Allylglycidylether und Vinylglycidylether.

Bevorzugte Verbindungen der Formeln I, II und IV sind Maleinsäure, Maleinsäureanhydrid und Epoxygruppen-enthaltende Ester der Acrylsäure und/oder Methacrylsäure, wie Glycidylacrylat, Glycidylmethacrylat und die Ester mit tertiären Alkoholen, wie t-Butylacrylat. Letztere weisen zwar keine freien Carboxylgruppen auf, kommen in ihrem Verhalten aber den freien Säuren nahe und werden deshalb als Monomere mit latenten Carboxylgruppen bezeichnet.

Vorteilhaft bestehen die Copolymeren aus 50 bis 98 Gew.-% Ethylen, 0,1 bis 20 Gew.-% Epoxygruppen enthaltenden Monomeren und/ oder Methacrylsäure und/oder Säureanhydridgruppen enthaltenden Monomeren sowie der restlichen Menge an (Meth)acrylsäureestern.

Besonders bevorzugt sind Copolymerisate aus

| | |
|---|---|
| 50 bis 98, | insbesondere 55 bis 95 Gew.-% Ethylen, |
| 0,1 bis 40, | insbesondere 0,3 bis 20 Gew.-% Glycidylacrylat und/oder Glycidylmethacrylat, (Meth)acrylsäure und/oder Maleinsäureanhydrid, und |
| 1 bis 45, | insbesondere 10 bis 40 Gew.-% n-Butylacrylat und/oder 2-Ethylhexylacrylat. |

Weitere bevorzugte Ester der Acryl- und/oder Methacrylsäure sind die Methyl-, Ethyl-, Propyl- und i- bzw. t-Butylester.

Daneben können auch Vinylester und Vinylether als Comonomere eingesetzt werden.

Die vorstehend beschriebenen Ethylencopolymeren können nach an sich bekannten Verfahren hergestellt werden, vorzugsweise durch statistische Copolymerisation unter hohem Druck und erhöhter Temperatur. Entsprechende Verfahren sind allgemein bekannt.

Bevorzugte Elastomere sind auch Emulsionspolymerisate, deren Herstellung z.B. bei Blackley in der Monographie "Emulsion Polymerization" beschrieben wird. Die verwendbaren Emulgatoren und Katalystoren sind an sich bekannt.

Grundsätzlich können homogen aufgebaute Elastomere oder aber solche mit einem Schalenaufbau eingesetzt werden. Der schalenartige Aufbau wird durch die Zugabereihenfolge der einzelnen Monomeren bestimmt; auch die Morphologie der Polymeren wird von dieser Zugabereihenfolge beeinflußt.

Nur stellvertretend seien hier als Monomere für die Herstellung des Kautschukteils der Elastomeren Acrylate wie z.B. n-Butylacrylat und 2-Ethylhexylacrylat, entsprechende Methacrylate, Butadien und Isopren sowie deren Mischungen genannt. Diese Monomeren können mit weiteren Monomeren wie z.B. Styrol, Acrylnitril, Vinylethern und weiteren Acrylaten oder Methacrylaten wie Methylmethacrylat, Methylacrylat, Ethylacrylat und Propylacrylat copolymerisiert werden.

Die Weich- oder Kautschukphase (mit einer Glasübergangstemperatur von unter 0°C) der Elastomeren kann den Kern, die äußere Hülle oder eine mittlere Schale (bei Elastomeren mit mehr als zweischaligem Aufbau) darstellen; bei mehrschaligen Elastomeren können auch mehrere Schalen aus einer Kautschukphase bestehen.

Sind neben der Kautschukphase noch eine oder mehrere Hartkomponenten (mit Glasübergangstemperaturen von mehr als 20°C) am Aufbau des Elastomeren beteiligt, so werden diese im allgemeinen durch Polymerisation von Styrol, Acrylnitril, Methacrylnitril, α -Methylstyrol, p-Methylstyrol, Acrylsäureestern und Methacrylsäureestern wie Methylacrylat, Ethylacrylat und Methylmethacrylat als Hauptmonomeren hergestellt. Daneben können auch hier geringere Anteile an weiteren Comonomeren eingesetzt werden.

In einigen Fällen hat es sich als vorteilhaft herausgestellt, Emulsionspolymerisate einzusetzen, die an der Oberfläche reaktive Gruppen aufweisen. Derartige Gruppen sind z.B. Epoxy-, Carboxyl-, latente Carboxyl-, Amino- oder Amidgruppen sowie funktionelle Gruppen, die durch Mitverwendung von Monomeren der allgemeinen Formel 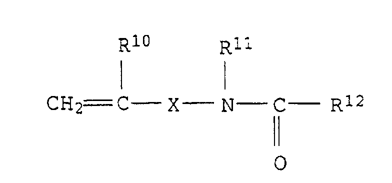 eingeführt werden können,
wobei die Substituenten folgende Bedeutung haben können:
- R¹⁰: Wasserstoff oder eine C₁- bis C₄-Alkylgruppe,
- R¹¹: Wasserstoff, eine C₁- bis C₈-Alkylgruppe oder eine Arylgruppe, insbesondere Phenyl,
- R¹²: Wasserstoff, eine C₁- bis C₁₀-Alkyl-, eine C₆- bis C₁₂-Arylgruppe oder -OR¹³
- R¹³: eine C₁- bis C₈-Alkyl- oder C₆- bis C₁₂-Arylgruppe, die gegebenenfalls mit O- oder N-haltigen Gruppen substituiert sein können,
- X: eine chemische Bindung, eine C₁- bis C₁₀-Alkylen- oder C₆-C₁₂-Arylengruppe oder 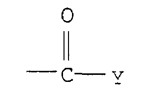
- Y: O-Z oder NH-Z und
- Z: eine C₁- bis C₁₀-Alkylen- oder C₆- bis C₁₂-Arylengruppe.

Auch die in der EP-A 208 187 beschriebenen Pfropfmonomeren sind zur Einführung reaktiver Gruppen an der Oberfläche geeignet.

Als weitere Beispiele seien noch Acrylamid, Methacrylamid und substituierte Ester der Acrylsäure oder Methacrylsäure wie (N-t-Butylamino)-ethylmethacrylat, (N,N-Dimethylamino) ethylacrylat, (N,N-Dimethylamino)-methylacrylat und (N,N-Diethylamino)ethylacrylat genannt.

Weiterhin können die Teilchen der Kautschukphase auch vernetzt sein. Als Vernetzer wirkende Monomere sind beispielsweise Buta-1,3-dien, Divinylbenzol, Diallylphthalat und Dihydrodicyclopentadienylacrylat sowie die in der EP-A 50 265 beschriebenen Verbindungen.

Ferner können auch sogenannten pfropfvernetzende Monomere (graft-linking monomers) verwendet werden, d.h. Monomere mit zwei oder mehr polymerisierbaren Doppelbindungen, die bei der Polymerisation mit unterschiedlichen Geschwindigkeiten reagieren. Vorzugsweise werden solche Verbindungen verwendet, in denen mindestens eine reaktive Gruppe mit etwa gleicher Geschwindigkeit wie die übrigen Monomeren polymerisiert, während die andere reaktive Gruppe (oder reaktive Gruppen) z.B. deutlich langsamer polymerisiert (polymerisieren). Die unterschiedlichen Polymerisationsgeschwindigkeiten bringen einen bestimmten Anteil an ungesättigten Doppelbindungen im Kautschuk mit sich. Wird anschließend auf einen solchen Kautschuk eine weitere Phase aufgepfropft, so reagieren die im Kautschuk vorhandenen Doppelbindungen zumindest teilweise mit den Pfropfmonomeren unter Ausbildung von chemischen Bindungen, d.h. die aufgepfropfte Phase ist zumindest teilweise über chemische Bindungen mit der Pfropfgrundlage verknüpft.

Beispiele für solche pfropfvernetzende Monomere sind Allylgruppen enthaltende Monomere, insbesondere Allylester von ethylenisch ungesättigten Carbonsäuren wie Allylacrylat, Allylmethacrylat, Diallylmaleat, Diallylfumarat, Diallylitaconat oder die entsprechenden Monoallylverbindungen dieser Dicarbonsäuren. Daneben gibt es eine Vielzahl weiterer geeigneter pfropfvernetzender Monomerer; für nähere Einzelheiten sei hier beispielsweise auf die US-PS 4 148 846 verwiesen.

Im allgemeinen beträgt der Anteil dieser vernetzenden Monomeren an dem schlagzäh modifizierenden Polymer bis zu 5 Gew.-%, vorzugsweise nicht mehr als 3 Gew.-%, bezogen auf das schlagzäh modifizierende Polymere.

Nachfolgend seien einige bevorzugte Emulsionspolymerisate aufgeführt. Zunächst sind hier Pfropfpolymerisate mit einem Kern und mindestens einer äußeren Schale zu nennen, die folgenden Aufbau haben:

| Typ | Monomere für den Kern | Monomere für die Hülle |
|---|---|---|
| I | Buta-1,3-dien, Isopren, n-Butylacrylat, Ethylhexylacrylat oder deren Mischungen | Styrol, Acrylnitril, Methylmethacrylat |
| II | wie I aber unter Mitverwendung von Vernetzern | wie I |
| III | wie I oder II | n-Butylacrylat, Ethylacrylat, Methylacrylat, Buta-1,3-dien, Isopren, Ethylhexylacrylat |
| IV | wie I oder II | wie I oder III aber unter Mitverwendung von Monomeren mit reaktiven Gruppen wie hierin beschrieben |
| V | Styrol, Acrylnitril, Methylmethacrylat oder deren Mischungen | erste Hülle aus Monomeren wie unter I und II für den Kern beschrieben zweite Hülle wie unter I oder IV für die Hülle beschrieben |

Anstelle von Pfropfpolymerisaten mit einem mehrschaligen Aufbau können auch homogene, d.h. einschalige Elastomere aus Buta-1,3-dien, Isopren und n-Butylacrylat oder deren Copolymeren eingesetzt werden. Auch diese Produkte können durch Mitverwendung von vernetzenden Monomeren oder Monomeren mit reaktiven Gruppen hergestellt werden.

Beispiele für bevorzugte Emulsionspolymerisate sind n-Butylacrylat/ (Meth)acrylsäure-Copolymere, n-Butylacrylat/Glycidylacrylat- oder n-Butylacrylat/Glycidylmethacrylat-Copolymere, Pfropfpolyme-risate mit einem inneren Kern aus n-Butylacrylat oder auf Butadienbasis und einer äußeren Hülle aus den vorstehend genannten Copolymeren und Copolymere von Ethylen mit Comonomeren, die reaktive Gruppen liefern.

Die beschriebenen Elastomere können auch nach anderen üblichen Verfahren, z.B. durch Suspensionspolymerisation, hergestellt werden.

Siliconkautschuke, wie in der DE-A 37 25 576, der EP-A 235 690, der DE-A 38 00 603 und der EP-A 319 290 beschrieben, sind ebenfalls bevorzugt.

Selbstverständlich können auch Mischungen der vorstehend aufgeführten Kautschuktypen eingesetzt werden.

Weiterhin können die erfindungsgemäßen thermoplastischen Formmassen Stabilisatoren, Oxidationsverzögerer, Mittel gegen Wärmezersetzung und Zersetzung durch ultraviolettes Licht, Gleit- und Entformungsmittel, Färbemittel wie Farbstoffe und Pigmente, Keimbildungsmittel, Weichmacher usw. enthalten.

Als Beispiele für Oxidationsverzögerer und Wärmestabilisatoren (unterschiedlich von C) und D)) sind Hydrochinone, aromatische sekundäre Amine wie Diphenylamine, verschiedene substituierte Vertreter dieser Gruppen und deren Mischungen in Konzentrationen bis zu 1 Gew.-%, bezogen auf das Gewicht der thermoplastischen Formmassen genannt.

Als UV-Stabilisatoren, die im allgemeinen in Mengen bis zu 2 Gew.-%, bezogen auf die Formmasse, verwendet werden, seien verschiedene substituierte Resorcine, Salicylate, Benzotriazole und Benzophenone genannt.

Es können anorganische Pigmente, wie Titandioxid, Ultramarinblau, Eisenoxid und Ruß, weiterhin organische Pigmente, wie Phthalocyanine, Chinacridone, Perylene sowie Farbstoffe, wie Nigrosin und Anthrachinone als Farbmittel zugesetzt werden, in Mengen bis zu 5 Gew.-%.

Als Keimbildungsmittel können Natriumphenylphosphinat, Aluminiumoxid oder Siliziumdioxid eingesetzt werden.

Gleit- und Entformungsmittel, welche üblicherweise in Mengen bis zu 1 Gew.-% eingesetzt werden, sind bevorzugt langkettige Fettsäuren (z.B. Stearinsäure oder Behensäure), deren Salze (z.B. Ca- oder Zn-Stearat) sowie Amidderivate (z.B. Ethylen-bis-stearylamid) oder Montanwachse (Mischungen aus geradkettigen, gesättigten Carbonsäuren mit Kettenlängen von 28 bis 32 C-Atomen) sowie niedermolekulare Polyethylen- bzw. Polypropylenwachse.

Als geeignete Flammschutzmittel seien roter Phosphor, Melamincyanurat oder Magnesiumhydroxid genannt.

Die erfindungsgemäßen thermoplastischen Formmassen können nach an sich bekannten Verfahren hergestellt werden, in dem man die Ausgangskomponenten in üblichen Mischvorrichtungen wie Schneckenextrudern, Brabender-Mühlen oder Banbury-Mühlen mischt und anschließend extrudiert. Nach der Extrusion kann das Extrudat abgekühlt und zerkleinert werden. Es können auch einzelne Komponenten vorgemischt werden und dann die restlichen Ausgangsstoffe einzeln und/oder ebenfalls gemischt hinzugegeben werden. Die Mischtemperaturen liegen in der Regel bei 230 bis 290°C.

Die Polyamidmischungen kann man danach einer weiteren thermischen Behandlung, d.h. einer Nachkondensation in fester Phase unterwerfen. In Temperaggregaten wie z.B. einem Taumler-Mischer oder kontinuierlich sowie diskontinuierlich betriebenen Temperrohren tempert man die in der jeweiligen Bearbeitungsform vorliegende Formmasse, bis die gewünschte Viskositätszahl VZ oder relative Viskosität ηrel z.B. des Polyamids erreicht wird. Der Temperaturbereich der Temperung hängt vom Schmelzpunkt der reinen Komponente A) ab. Bevorzugte Temperaturbereiche sind 5 bis 50, vorzugsweise 20 bis 30°C unterhalb des jeweiligen Schmelzpunkts von A). Das Verfahren erfolgt vorzugsweise in einer Inertgasatmosphäre, wobei Stickstoff und überhitzter Wasserdampf als Inertgase bevorzugt sind.

Die Verweilzeiten betragen im allgemeinen von 0,5 bis 50, vorzugsweise 4 bis 20 Stunden. Anschließend werden aus den Formmassen mittels üblicher Vorrichtungen Formteile hergestellt.

Die erfindungsgemäßen Formmassen zeichnen sich durch eine gute Verarbeitbarkeit und gute mechanische Eigenschaften aus. Daraus erhältliche metallisch gefärbte Formkörper weisen eine gute Oberfläche (geringe Bindenahtsichtbarkeit) und eine hohe Stabilität bei erhöhter Dauergebrauchstemperatur auf.

Derartige Formkörper eignen sich als Artikel mit metallischen Designanforderungen wie beispielsweise Ansaugrohre, Zylinderkopfabdeckungen, Motorabdeckungen, Radkappen, Handwerkzeugsgehäuse oder Schutzhelme.

### Beispiele

Es wurden folgende Komponenten eingesetzt:

### Komponente A)

Polyamid 6 mit einer VZ von 151 ml/g, gemessen in 96 %iger H₂SO₄ als 0,5 Gew.-%-ige Lösung (Ultramid® B3 der BASF AG).

### Komponente B)

Aluminiumflitter, quadratische Form mit einer Kantenlänge von 0,1 mm und einem Feinanteil < 50 µm von unter 1 %.

### Komponente B/V

Aluminiumpulver, nadelförmige Form mit einem Feinanteil < 50 µm von ≥ 10 %

### Komponente C)

| | |
|---|---|
| C/1 | N,N'-hexamethylen-bis-(3,5-di-tert-butyl-4-hydroxy-hydrozimtsäureamid (Irganox® 1098 der Firma Ciba Geigy AG) |
| C/2 | Bis-[3,3-bis-(4'-hydroxy-3-tert-butylphenyl)-butansäureacid] glycolester (Hostanox® 03 der Firma Hoechst AG) |

### Komponente D)

| | |
|---|---|
| D/1 | 2-[[2,4,8,10-Tetrakis(1,1)-dimethylethyl)di-benzo[D,F] [1,3,2]-dioxaphosphepin-6-yl]oxy]-N,N-bis[2-[[2,4,8,10-tetrakis(1,1-dimethylethyl)di-benzo[D,F] [1,3,2]dioxaphosphepin-6-yl]oxy]ethyl)ethanamine), Irgafos® 12 der Firma Ciba Geigy AG) |
| D/2 | (Tris-2,4-di-tert-butylphenyl)phosphit (Hostanox® PAR 24 der Firma Hoechst AG) |
| D/3 | Natriumhypophosphit |

### Komponente E

Schnittglasfasern

### Herstellung der Formmassen

Auf einem Zweischneckenextruder (ZE 60, Fa. Berstorff) wurden die Komponenten A)bis E) in den in der Tabelle 1 angegebenen Mengenverhältnissen bei 260°C (Durchsatz 316 kg/h) in üblicher Weise konfektioniert, als Strang ausgetragen, im Wasserbad gekühlt und granuliert.

Das erhaltene Polyamid-Granulat wurde zu Probekörpern nach ISO 3167 verspritzt. Die Probekörper wurden über 1000 Stunden bei einer Temperatur von 120°C gelagert, wobei nach 100, 200, 500 und 1000 Stunden die Verfärbung der Proben, ausgedrückt durch den Farbabstand ΔE nach DIN 53236/B, gemessen wurde. Zur Beurteilung der Bindenahtsichtbarkeit wurden aus dem gleichen Granulat Platten mit kreisrundem Durchbruch (Durchmesser: 1,5 cm) abgespritzt, wobei die Bindenahtsichtbarkeit visuell anhand der Bildung von Fließlinien im Fließschatten des Durchbruchs beurteilt wurde.

Die Ergebnisse der Messungen sind Tabelle 2 zu entnehmen.

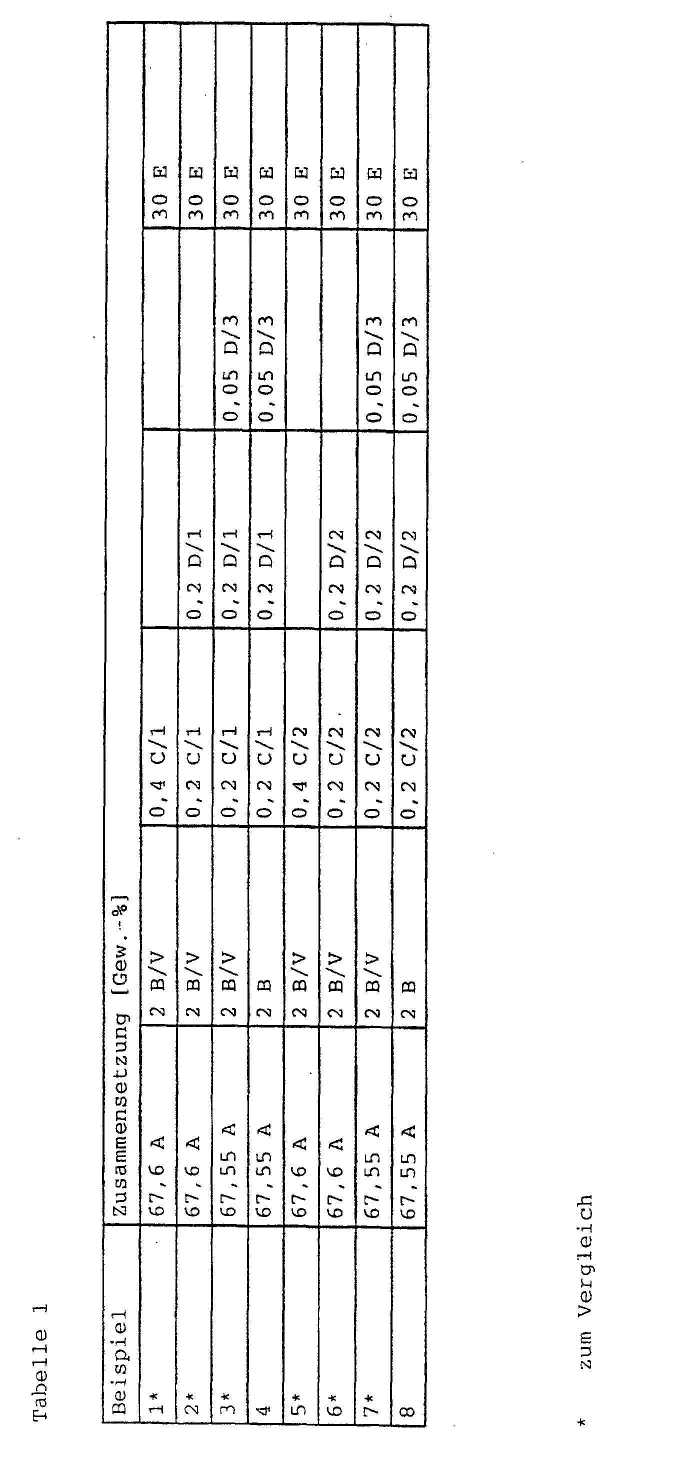

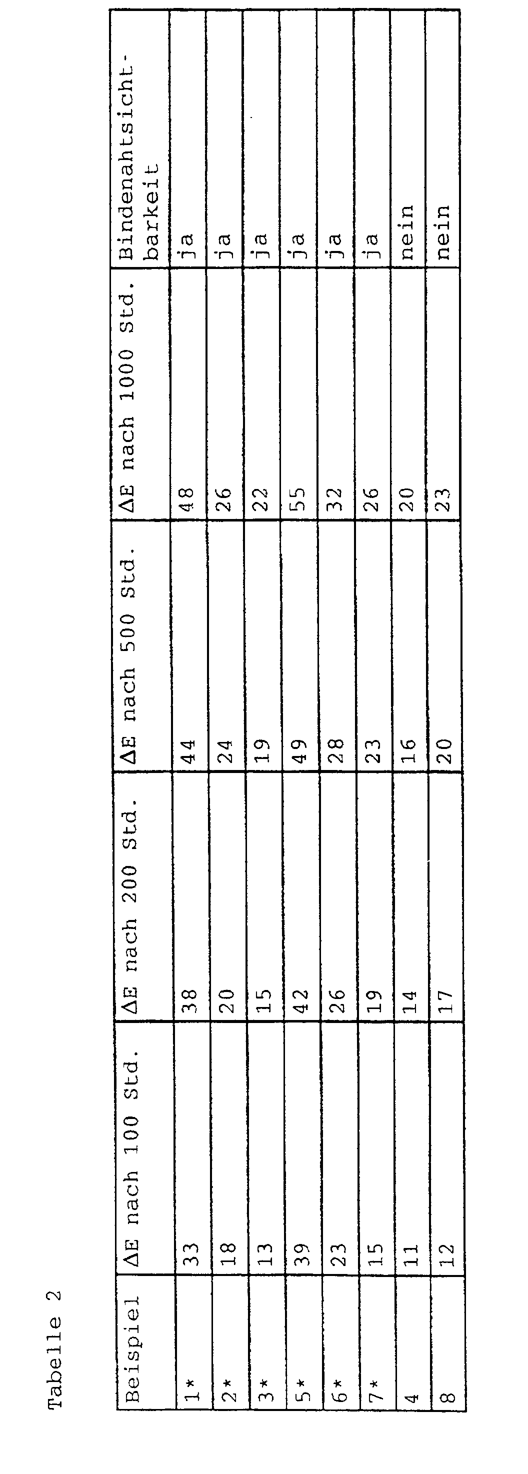

## Patentansprüche

1. Thermoplastische Formmassen, enthaltend
| | |
|---|---|
| A) 10 bis 99,8 Gew.-% | eines thermoplastischen Polyamids |
| B) 0,1 bis 5 Gew.-% | Metallflitter, welche rechteckig oder quadratisch geformt sind und eine Kantenlänge von 0,050 bis 1,0 mm und einen Feinanteil < 50 µm von < 1 %, bezogen auf 100 Gew.-% B), aufweisen |
| C) 0,05 bis 2 Gew.-% | mindestens einer sterisch gehinderten Phenolverbindung |
| D) 0,05 bis 2 Gew.-% | eines phosphorhaltigen Stabilisators ausgewählt aus der Gruppe von Verbindungen der phosphorigen Säure, Hypophosphite oder deren Mischungen |
| E) 0 bis 70 Gew.-% | weiterer Zusatzstoffe und Verarbeitungshilfsmittel, |
wobei die Summe der Gewichtsprozente der Komponenten A) bis E) 100 % ergibt.

2. Thermoplastische Formmassen nach Anspruch 1, welche Aluminiumflitter als Komponente B) enthalten.

3. Thermoplastische Formmassen nach den Ansprüchen 1 oder 2, enthaltend als Komponente C) N,N'-hexamethylen-bis-(3,5-di-tert-butyl-4-hydroxyhydrozimtsäureamid, Pentaerythrityltetrakis- 3- (3,5-di-tert-butyl-4-hydroxyphenyl)propionat, n-Octadecanoyl-3-(3,5-di-tert-butyl-4-hydroxyphenyl)-propionat, Bis-[3,3-bis-(4'-hydroxy-3'-tert-butylphenyl)butansäure- acid]glycolester oder deren Mischungen.

4. Thermoplastische Formmassen nach den Ansprüchen 1 bis 3, enthaltend als Komponente D)
2-[[2,4,8,10-Tetrakis(1,1)-dimethylethyl)dibenzo[D,F] [1,3,2]-dioxaphosphepin-6-yl]oxy]-N,N-bis[2-[[2,4,8,10-tetrakis(1,1-dimethylethyl)dibenzo[D,F] [1,3,2]dioxaphosphepin-6-yl]oxy]ethyl)ethanamine, Tris-2,4-di-tert-butylphenyl)phosphit, Natriumhyphophosphit oder deren Mischungen.

5. Verwendung der thermoplastischen Formmassen gemäß den Ansprüchen 1 bis 4 zur Herstellung von metallisch gefärbten Formkörpern, Fasern und Folien.

6. Metallisch gefärbte Formkörper jeglicher Art, erhältlich aus den thermoplastischen Formmassen gemäß den Ansprüchen 1 bis 4.

7. Metallisch gefärbte Aussaugrohre, Zylinderkopfabdeckungen, Motorabdeckungen, Radkappen, Handwerkzeuggehäuse und Schutzhelme, erhältlich aus den thermoplastischen Formmassen gemäß den Ansprüchen 1 bis 4.

## Claims

1. A thermoplastic molding composition comprising
| | |
|---|---|
| A) from 10 to 99.8% by weight | of a thermoplastic polyamide |
| B) from 0.1 to 5% by weight | of metal flakes which are rectangular or square in shape and have an edge length of from 0.050 to 1.0 mm and a proportion of <1%, based on 100% by weight of B), of fine material of size <50 µm |
| C) from 0.05 to 2% by weight | of at least one sterically hindered phenolic compound |
| D) from 0.05 to 2% by weight | of a phosphorus-containing stabilizer selected from the group consisting of compounds of phosphorous acid, hypophosphites and mixtures of these |
| E) from 0 to 70% by weight | of other additives and processing aids, |
where the total of the percentages by weight of components A) to E) is 100%.

2. A thermoplastic molding composition as claimed in claim 1 which contains aluminum flakes as component B).

3. A thermoplastic molding composition as claimed in claim 1 or 2 containing, as component C),
N,N'-hexamethylenebis-3,5-di-tert-butyl-4-hydroxyhydrocinnamide, pentaerythritol tetrakis-3-(3,5-di-tert-butyl-4-hydroxyphenyl)propionate, n-octadecanyl 3-(3,5-di-tert-butyl-4-hydroxyphenyl)propionate, bis[3,3-bis(4'-hydroxy-3'-tert-butylphenyl)butanoic acid] glycol ester or mixtures of these.

4. A thermoplastic molding composition as claimed in any of claims 1 to 3, containing, as component D),
2-[[2,4,8,10-tetrakis(1,1)-dimethylethyl)dibenzo[D,F][1,3,2]-dioxaphosphepin-6-yl]oxy]-N,N-bis[2-[[2,4,8,10-tetrakis(1,1-dimethylethyl)dibenzo[D,F][1,3,2]dioxaphosphepin-6-yl]oxy]ethyl)ethanamine, tris(2,4-di-tert-butylphenyl) phosphite, sodium hypophosphite or mixtures of these.

5. The use of a thermoplastic molding composition as claimed in any of claims 1 to 4 for producing a metallic-colored shaped article, fiber or film.

6. A metallic-colored shaped article of any type, obtainable from a thermoplastic molding composition as claimed in any of claims 1 to 4.

7. A metallic-colored outlet manifold, cylinder-head cover, engine covering, hub cap, hand-tool casing or safety helmet obtainable from a thermoplastic molding composition as claimed in any of claims 1 to 4.

## Revendications

1. Masses de moulage thermoplastiques, contenant
| | |
|---|---|
| A) de 10 à 99,8% en poids | d'un polyamide thermoplastique |
| B) de 0,1 à 5% en poids | de paillettes métalliques de forme rectangulaire ou carrée, présentant une longueur d'arête de 0,050 à 1,0 µm et une fraction de fines < 50 µm de moins de 1%, par rapport à 100% en poids de B), |
| C) de 0,05 à 2% en poids | d'au moins un composé phénolique à empêchement stérique, |
| D) de 0,05 à 2% en poids | d'un stabilisateur phosphoré choisi dans le groupe des composés de l'acide phosphorique, des hypophosphites ou leurs mélanges, |
| E) de 0 à 70% en poids | d'autres additifs et auxiliaires de traitement, |
la somme des pourcentages en poids des composants A) à E) totalisant 100%.

2. Masses de moulage thermoplastiques selon la revendication 1, contenant des paillettes d'aluminium en tant que composant B).

3. Masses de moulage thermoplastiques selon les revendications 1 ou 2, contenant en tant que composant C) de l'amide d'acide N,N'-hexaméthylène-bis-(3,5-ditert.-butyl)-4-hydroxyhydrocinnamique, du propionate de pentaérythrityltétrakis-3-(3,5-ditert.-butyl-4-hydroxyphényle), du propionate de n-octadécanoyl-3-(3,5-ditert.-butyl-4-hydroxyphényle), du glycolester de l'acide bis-[3,3-bis-(4'-hydroxy-3'-tert.-butylphényl)-butanoïque, ou leurs mélanges.

4. Masses de moulage selon les revendications 1 à 3, contenant en tant que composant D)
de la 2-{[2,4,8,10-tétrakis(1,1)-diméthyléthyl)dibenzo[D,F] {1,3,2}-dioxaphosphépine-6-yl]oxy]-N,N-bis{2-[(2,4,8,10-tétrakis(1,1-diméthyléthyl)-dibenzo-[D, F][1,3,2]dioxaphosphépine-6-yl]oxyéthyl}éthanamine, du phosphite de tris-2,4-ditert.-butylphényle), de l'hypophosphite de sodium, ou leurs mélanges.

5. Utilisation des masses de moulage thermoplastiques selon les revendications 1 à 4 pour la production de corps façonnés, de fibres et de feuilles d'aspect métallisé.

6. Corps façonnés d'aspect métallisé de tous types, que l'on peut obtenir à partir des masses de moulage thermoplastiques selon les revendications 1 à 4.

7. Tubulures d'aspiration, couvre-culasse, capots de compartiment moteur, chapeaux de roues, trousses à outils et casques de protection métallisés, que l'on peut produire à partir des masses de moulage thermoplastiques selon les revendications 1 à 4.
